# EUROPÄISCHE PATENTSCHRIFT

(11) **EP 0 855 944 B1**
(45) Veröffentlichungstag und Bekanntmachung des Hinweises auf die Patenterteilung: **22.08.2001**
(21) Anmeldenummer: 97930691.7
(22) Anmeldetag: 18.07.1997
(51) Int. Cl.: B23B 5/16

(54) **ROHRENDENBEARBEITUNGSGERÄT**
DEVICE FOR THE MACHINING OF TUBE ENDS
APPAREIL POUR L'USINAGE DES EXTREMITES DE TUBES

(30) Priorität: 12.08.1996 DE 19633102
(43) Veröffentlichungstag der Anmeldung: 05.08.1998
(73) Patentinhaber: Georg Fischer Rohrverbindungstechnik GmbH, 78224 Singen (DE)
(72) Erfinder: KRAMER, Herbert, D-78224 Singen (DE)
(74) Vertreter: Weiss, Wolfgang
(86) Internationale Anmeldenummer: IB9700898
(87) Internationale Veröffentlichungsnummer: WO9806526

(56) Entgegenhaltungen:
- EP-A- 0 033 588
- DE-A- 3 238 102
- US-A- 3 330 366
- US-A- 4 422 356
- US-A- 4 452 110
- US-A- 5 361 659

## Beschreibung

Die vorliegende Erfindung betrifft ein transportables Rohrendenbearbeitungs-gerät gemäß dem Oberbegriff des Patentanspruchs 1.

Transportable Bearbeitungsgeräte für die spanabhebende Bearbeitung der Enden von rohrförmigen Werkstücken, wie z.B. Rohren, als Vorbereitungsschritt für das Schweissen oder für andere Bearbeitungsoperationen sind bekannt. Diese Geräte kommen hauptsächlich für die Bearbeitung von Endlos-Rohren oder bereits verlegten Rohren vor Ort zum Einsatz, beispielsweise im Reparaturfall. Dabei ist es erforderlich dass entsprechende Bearbeitungsgeräte kompakt und in der Handhabung und Bedienung einfach aber dennoch vielseitig gestaltet sind. Ferner sind bekannte Rohrendenbearbeitungsgeräte mit Werkzeughaltern und Schneidwerkzeugen ausgerüstet um die Rohrstirnflächen mittels der Schneidwerkzeuge in festgelegten Positionen zu halten und zu bearbeiten. In der Regel weisen bekannte Rohrendenbearbeitungsgeräte eine Antriebseinheit auf, mittels welcher das Antriebsmoment über eine Kegelradverzahnung quer zur Antriebsachse auf eine angetriebene Hohlwelle übertragen wird. An der Hohlwelle ist ein Werkzeugträger fest mit dieser verbunden. Die Hohlwelle ist drehbar um eine Stange gelagert. Diese Stange ist hohl und weist im Innern eine Spindel auf, die mit einer Spanneinrichtung wirkverbunden ist. Durch Drehen der Spindel werden Spannbacken im Innern des Rohres radial gegen die Rohrinnenwand gepresst und somit das Rohrendbearbeitungsgerät am Rohr positioniert. Am Ende der Hohlstange ist ein Gewinde angeordnet, auf welcher das Rohrendbearbeitungsgerät mit den am Werkzeughalter angeordneten Werkzeugen mittels einer Zustelleinrichtung gegen das Rohrende zugestellt wird.

Aus der EP-A-033 588 ist ein gattungsgemässes Rohrendenbearbeitungsgerät bekannt. Das Gerät umfasst einen Rahmen, in dem eine Hohlstange und nebeneinander einen Motor, eine Getriebeanordnung und einen Werkzeugträger angeordnet sind. Das Gerät umfasst auch eine Spanneinrichtung zum Festspannen eines zu bearbeitenden Rohrendes am Rohrendenbearbeitungsgerät. Der Rahmen des Gerätes weist am Boden einen Grundrahmen auf. Am oberen Teil des Rahmens sind Löcher vorgesehen für ein Tragseil, damit das Gerät in einem Graben hinuntergelassen werden kann. Die Antriebswelle des Motors ist durch eine Getriebeanordnung, die aus einem Riementrieb und einem Planetengetriebe besteht, mit dem Werkzeugträger verbunden. Der Motor ist im oberen Teil des Rahmens angeordnet und die Antriebswelle des Motors verläuft parallel zur Hohlstange. Der Werkzeugträger mit dem Schneidwerkzeug ist von der Hohlstange gesehen einseitig ausgebildet und, bedingt durch das Planetengetriebe, exzentrisch angeordnet. Durch diese Anordnung des Motors und des Werkzeugträgers wird die Lage des Schwerpunktes des Gerätes ungünstig beeinflusst. Hierdurch entstehen bei der Bearbeitung des Rohrendes Schwingungen, die eine präzise Bearbeitung unmöglich machen. Die ungünstige Schwerpunktslage beeinflusst auch die Standfestigkeit und das einfache Handling des Gerätes. Das Gerät kann zwar von Baustelle zur Baustelle transportiert werden, es ist aber nicht leicht tragbar.

Ausgehend vom beschriebenen Stand der Technik ist es Aufgabe der vorliegenden Erfindung, bekannte transportable Rohrendenbearbeitungsgeräte so zu verbessern, dass für den Anwender eine einfachere Handhabung sowohl in der Bedienung des Gerätes selber wie auch beim Werkzeugwechsel resultiert.

Diese Aufgabe wird durch die kennzeichnenden Merkmale des Anspruches 1 gelöst.

Weitere vorteilhafte Merkmale der Erfindung gehen aus den abhängigen Ansprüchen hervor.

Ein bevorzugtes Ausführungsbeispiel wird anhand der beigelegten Zeichnungen näher erläutert.

Es zeigen:
- Fig.1: ein erfindungsgemässes Rohrendenbearbeitungsgerät teilweise geschnitten
- Fig.2: eine Draufsicht auf einen Werkzeugträger des Rohrendenbearbeitungsgerätes
- Fig.3: einen Schnitt durch den Werkzeugträger mit eingespanntem Schneidwerkzeug entlang A-A und
- Fig.4: einen Schnitt durch das Schneidwerkzeug.

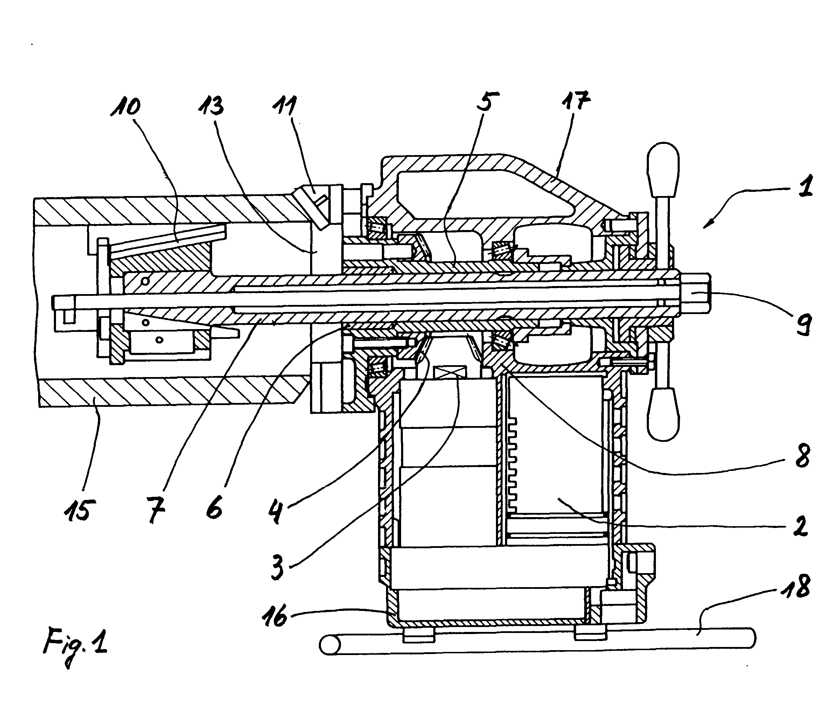

Figur 1 zeigt ein erfindungsgemässes Rohrendenbearbeitungs-gerät 1. Eine Antriebseinheit 2 weist einen Druckluft- oder Elektromotor mit einer Antriebswelle 3 auf. Die Drehmomentübertragung erfolgt von der Antriebswelle 3 auf eine angetriebene Hohlwelle 5 mittels einer Verzahnungsanordnung 4. Die Wellenanordnung ist spielfrei gelagert was zu einer verbesserten Schnittqualität führt. Die Hohlwelle 5 ist mittels eines Gleitlagers 6 auf einer Hohlstange 7 drehbar gelagert. An einem Ende der Hohlwelle 5 befindet sich stirnseitig ein Werkzeugträger 13. Im Inneren der Hohlstange 7 ist eine Spindel 9 angeordnet, die mit Spannbacken 10 im Innern eines zu bearbeitenden Rohres 15 zusammenwirkt zwecks Positionieren des Rohres für die spanende Bearbeitung. Durch Drehen der Spindel 9 werden die im Rohr liegenden Spannbacken 10 gegen die ) Rohrinnenwandung gepresst. Das Rohrendenbearbeitungsgerät 1 ist nun am Rohr 15 festgespannt.

Die Hohlwelle 5 ist gegenüber dem Gehäuse 8 in axialer und radialer Richtung mittels einer Wälzlageranordnung gelagert.

Motor und Getriebe sind nebeneinander angeordnet und mittels eines Zahnriementriebes miteinander wirkverbunden. Die bechriebenen Aggregate sind von einem Gehäuse 8 um- schlossen. Das Gehäuse weist zwei Handgriffe 17 und 18 auf. Der Handgriff 18 ist als Schlaufe ausgebildet und ist am unteren Teil 16 des Gehäuses 8 befestigt.

Der schlaufenförmige Teil dient als Auflage- bzw. Stützelement für das komplette Rohrendenbearbeitungsgerät. Am Bodenteil 16 des Gehäuses ist ein Bedienungselement (nicht dargestellt) angeordnet, der als mechanische Ent- und Verriegelung dient in Form einer Auf- und Zu- Drossel.

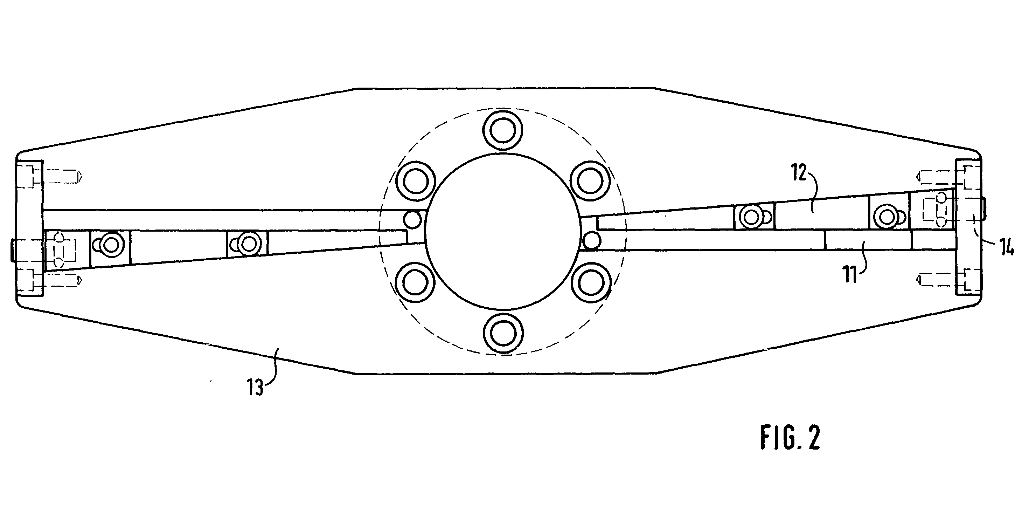

Der Werkzeughalter 11 ist, wie aus der Figur 2 ersichtlich, im Werkzeugträger 13 mittels eines Keilstückes 12 fixiert. Durch Anziehen der Schraube 14 wird das Keilstück 12 in radialer Richtung in den Werkzeugträger verschoben wodurch der Werkzeughalter 11 eingeklemmt wird. Der Vorteil dieser Ausbildung gegenüber herkömmlichen Klemmschrauben liegt darin, dass das Werkzeug mit einer grösseren Klemmfläche besser fixiert ist, was zu einer Schwingungsreduktion führt und damit zu einer qualitativ besseren Bearbeitung. Mögliche Dimensionseinstellungen des Schneidwerkzeuges in Abstimmung auf den zu bearbeitenden Rohrdurchmesser sind stufenlos möglich.

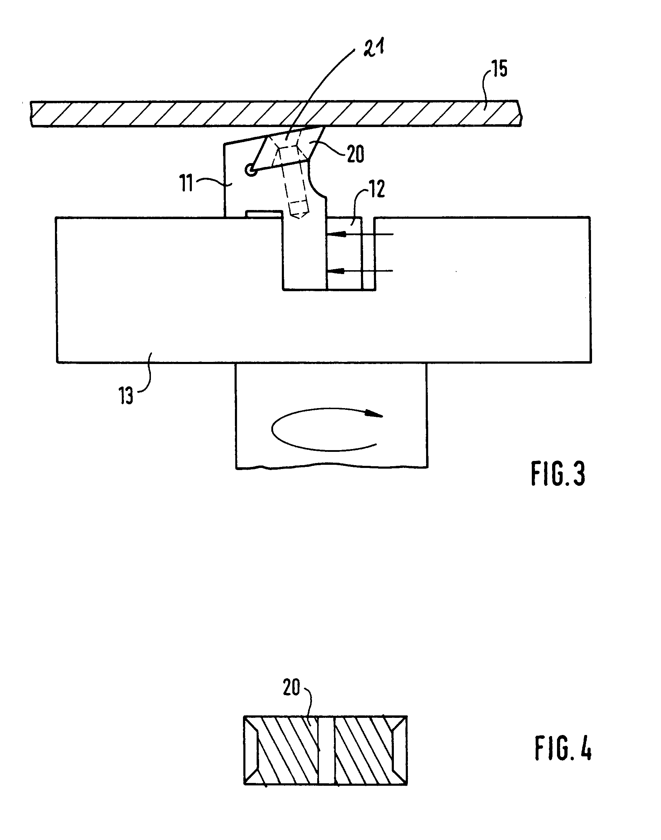

Die Figur 3 zeigt einen Schnitt durch den Werkzeugträger 13 mit dem, mittels des Keilstückes 12 positionierten Werkzeughalter 11. Das Keilstück ist in radialer Richtung verjüngt ausgebildet. Damit ist auch die Tiefenzugwirkung gesichert. Im Werkzeughalter 11 ist eine Schneidplatte 20, die mittels einer Schraube 21 darin befestigtwird, vorgesehen. Die Schneidplatte ist als Wendeplatte ausgebildet und weist vier wirksame Schneidkanten auf. Dies ist in der Figur 4 dargestellt. Alle vier Schneidkanten sind für den spanabhebenden Einsatz geschliffen. Bei Bedarf, d. h. wenn die Schneide stumpf wird, kann durch Wenden einfach und innert kürzester Zeit die neue unverbrauchte Schnittkante in den Einsatz kommen. Da vier Schnittkanten vorgesehen sind ergibt sich ein vier mal längerer Lebenszyklus als bei herkömmlichen Schneidelementen, wo in der Regel nur eine einmalige Verwendbarkeit des Schneidelementes vorgesehen ist. Ausserdem muss jeweils nur eine Schraube 21 gelöst und wieder angezogen werden. Dadurch entfällt die mit dem Wechseln üblicherweise verbundene Neupositionierung des Werkzeughal-ters. Man spart Zeit, Aufwand und Kosten.

## Patentansprüche

1. Transportables Rohrendenbearbeitungsgerät (1) mit einem Motor, einer Getriebeanordnung und einer Spanneinrichtung (10) zum Festspannen eines zu bearbeitenden Rohrendes an dem Rohrendenbearbeitungsgerät (1), wobei der Motor (2) und die Getriebeanordnung nebeneinander angeordnet sind und das Gerät eine Hohlstange (7) und einen Werkzeugträger (13) aufweist, dadurch gekennzeichnet, dass der Werkzeugträger (13) mindestens einen, in einer Nut geführten und mittels eines Keilstückes (12) radial in den Werkzeugträger (13) verschiebbar angeordneten Werkzeughalter (11) mit darin fixierter Schneidplatte (20) aufweist, welche Schneidplatte (20) als Wendeplatte ausgebildet ist und mindestens zwei Aktivschneidkanten aufweist, dass die Hohlstange (7) in einem Gehäuse (8) beziehungsweise gegenüber dem Gehäuse (8) gelagert ist und dass alle Aggregate mit Ausnahme des Werkzeugträgers (13) von dem Gehäuse (8) umschlossen sind und so eine kompakte und handliche Anordnung bilden und dass das Gehäuse (8) eine Bodenfläche aufweist, die als Standfläche dient und die Handhabung des Gerätes vereinfacht.

2. Transportables Rohrendenbearbeitungsgerät nach Anspruch 1, dadurch gekennzeichnet, dass der Werkzeughalter (11) mittels eines in der Nut verschiebbaren Keilstückes (12) am Werkzeugträger (13) mittels einer Schraube (14) zwecks Erreichung einer Tiefenzugwirkung positionierbar ist.

3. Transportables Rohrendenbearbeitungsgerät (1) nach Anspruch 1, dadurch gekennzeichnet, dass das Gehäuse (8) mindestens einen Handgriff (18) aufweist, der derart ausgebildet ist, dass er unterhalb eines Bodenteils (16) des Gehäuses (8) ein Abstützelement in Form einer Schlaufe bildet.

## Claims

1. Transportable pipe-end machining apparatus (1) having a motor, a gearing arrangement and a clamping device (10) for firmly clamping a pipe end to be machined on the pipe-end machining apparatus (1), the motor (2) and the gearing arrangement being arranged next to one another and the apparatus having a hollow bar (7) and a tool carrier (13), characterized in that the tool carrier (13) has at least one tool holder (11) which is guided in a groove and is arranged so as to be displaceable by means of a wedge piece (12) radially into the tool carrier (13) and has a cutting tip (20) fixed therein, which cutting tip (20) is designed as an indexable insert and has at least two active cutting edges, in that the hollow bar (7) is mounted in a housing (8) or relative to the housing (8), and in that all the units with the exception of the tool carrier (13) are enclosed by the housing (8) and thus form a compact and handy arrangement, and in that the housing (8) has a bottom surface which serves as a base and simplifies the handling of the apparatus.

2. Transportable pipe-end machining apparatus according to Claim 1, characterized in that the tool holder (11), by means of a wedge piece (12) displaceable in the groove, can be positioned on the tool carrier (13) by means of a screw (14) for the purpose of achieving a depth tightening effect.

3. Transportable pipe-end machining apparatus (1) according to Claim 1, characterized in that the housing (8) has at least one handle (18) which is designed in such a way that it forms a supporting element in the form of a loop below a bottom part (16) of the housing (8).

## Revendications

1. Dispositif d'usinage (1) transportable pour extrémités de tuyaux, comprenant un moteur, un système de transmission et un dispositif de serrage (10) pour le serrage d'une extrémité de tuyau à usiner sur le dispositif d'usinage (1) pour extrémités de tuyaux, le moteur (2) et le système de transmission étant disposés l'un à côté de l'autre et le dispositif présentant une tige creuse (7) et une traverse porte-outil (13), caractérisé en ce que la traverse porte-outil (13) présente au moins un porte-outil (11) guidé dans une rainure et disposé de manière déplaçable radialement au moyen d'une cale (12) dans la traverse porte-outil (13) avec une matrice de découpage (20) fixée dans celui-ci, laquelle matrice de découpage (20) est conçue en tant que plaque réversible et présente au moins deux arêtes de coupe actives, en ce que la tige creuse (7) est montée dans un boîtier (8), ou bien en face du boîtier (8), et en ce que tous les éléments à l'exception de la traverse porte-outil (13) sont enfermés dans le boîtier (8) et constituent donc un arrangement compact et maniable et en ce que le boîtier (8) présente une face de fond qui sert de socle et qui simplifie la manipulation du dispositif.

2. Dispositif d'usinage transportable pour extrémités de tuyaux selon la revendication 1, caractérisé en ce que le porte-outil (11) peut être positionné au moyen d'une cale (12) déplaçable dans la rainure sur la traverse porte-outil (13) au moyen d'une vis (14) afin d'obtenir un effet d'étirage en profondeur.

3. Dispositif d'usinage (1) transportable pour extrémités de tuyaux selon la revendication 1, caractérisé en ce que le boîtier (8) présente au moins une poignée (18) qui est conçue de telle sorte qu'elle forme en dessous d'une partie de fond (16) du boîtier (8) un élément de support en forme de boucle.
